# EUROPÄISCHE PATENTSCHRIFT

(11) **EP 2 885 551 B1**
(45) Veröffentlichungstag und Bekanntmachung des Hinweises auf die Patenterteilung: **06.07.2016**
(21) Anmeldenummer: 13771364.0
(22) Anmeldetag: 09.08.2013
(51) Int. Cl.: F16D 25/08

(54) **AUSRÜCKVORRICHTUNG FÜR EINE HYDRAULISCHE KUPPLUNGSBETÄTIGUNG**
RELEASE DEVICE FOR HYDRAULIC CLUTCH ACTUATION
DISPOSITIF DE DÉBRAYAGE POUR L'ACTIONNEMENT HYDRAULIQUE D'UN EMBRAYAGE

(30) Priorität: 16.08.2012 DE 102012214548; 16.08.2012 DE 102012214543; 16.08.2012 DE 102012214553; 20.06.2013 DE 102013211664
(43) Veröffentlichungstag der Anmeldung: 24.06.2015
(73) Patentinhaber: Schaeffler Technologies AG & Co. KG, 91074 Herzogenaurach (DE)
(72) Erfinder: BOSNJAK, Daniel, F-67470 Seltz (FR)
(86) Internationale Anmeldenummer: PCT/DE2013/200113
(87) Internationale Veröffentlichungsnummer: WO 2014/026687

(56) Entgegenhaltungen:
- WO-A2-2005/113998
- DE-A1-102007 034 846

## Beschreibung

Die Erfindung bezieht sich auf eine Ausrückvorrichtung für eine hydraulische Kupplungsbetätigung von Fahrzeugen, mit einem konzentrisch um eine Getriebeeingangswelle angeordneten Nehmerzylinder, dessen innerhalb eines Gehäuses axial bewegbarer und mit einem Ausrücklager verbundener Ringkolben radial außerhalb des Ausrücklagers angeordnet ist, wobei zumindest ein die axiale Bewegung des Ringkolbens begrenzendes Anschlagelement vorgesehen ist.

Konzentrische Nehmerzylinder (CSC - Concentric Slave Cylinder) weisen üblicherweise einen ringförmigen Kolben auf, der in engem Kontakt mit einer zwischen inneren und äußeren Zylinderwänden eines Zylinderkörpers (Gehäuses) definierten ringförmigen Bohrung gleitet. In eine dabei entstandene ringförmige Betätigungskammer wird Flüssigkeit eingeleitet, um den Kolben gegenüber dem Zylinder zu verschieben und so ein am Zylinderkörper angebrachtes Kupplungsausrücklager zu bewegen, in entsprechende Kupplungsausrückstifte der zugehörigen Kupplung einzurasten. Bekanntermaßen ist am kupplungsseitigen Ende des Gehäuses bzw. einer konzentrisch um die Getriebeeingangswelle angeordneten Führungshülse ein die axiale Bewegung des Kolbens begrenzender Anschlag vorgesehen.

In WO2005/113998 A2 wird eine Ausrückvorrichtung nach dem Oberbegriff des Anspruchs 1 offenbart.

So wird in DE 196 52 785 B4 eine Ausrückvorrichtung mit einem Sensorsystem beschrieben, bei welcher eine Stellwegerfassung des auf einer Führungshülse axial verschiebbar geführten Ringkolbens vorgesehen ist. Ein Ausrückvorgang der Reibungskupplung beginnt, sobald das Ausrücklager an Ausrückhebeln der Reibungskupplung anliegt, und endet, sobald der Ringkolben an einem auf der Führungshülse angeordneten Endanschlag anliegt.

In DE 103 23 570 A1 wird ein hydraulisches System mit einem eine Führungshülse sowie einen mit einem Ausrücklager verbundenen Kolben aufweisenden Nehmerzylinder offenbart, wobei an der Innenseite der Führungshülse eine umlaufende Hinterschneidung mit einem darin festgelegten, den Weg des Kolbens begrenzenden, Anschlagring vorgesehen ist. Der Kolben kommt dabei an dem über den gesamten Umfang radial über die Führungshülse hinausragenden Anschlagring zur Anlage.

Auch die DE 10 2008 004 027 A1 beschreibt einen konzentrischen Nehmerzylinder mit einer aus Kunststoff hergestellten Führungshülse, auf deren Mantelfläche ein Kolben bis zu einem Anschlag axial bewegbar ist. Der Anschlag ist in Form einer in die Führungshülse einsteckbaren Hülse mit einem Bund ausgeführt, wobei der Bund an der kupplungsseitigen Stirnfläche der Führungshülse anliegt und die Hülse im Innern mit der Führungshülse formschlüssig verbunden ist.

Der konstruktive Aufbau der oben genannten Lösungen des Standes der Technik weist einen radial innen in bzw. an dem Gehäuse des Nehmerzylinders angeordneten Ringkolben und ein radial außen angeordnetes Ausrücklager auf. Die radialen Abmessungen des Ringkolbens fallen somit geringer aus als die radialen Abmessungen des Ausrücklagers. Dadurch bietet sich auf der Führungshülse bzw. dem Gehäuse genug Platz für die Anbringung eines Anschlagelements, an dem der Ringkolben in axialer Richtung zur Anlage bringbar ist.

Bei Ausrückvorrichtungen für hydraulisch betätigte Kupplungen, bei denen das Ausrücklager radial innen und der Ringkolben radial außen in bzw. an dem Gehäuse des Nehmerzylinders angeordnet ist, d. h. bei denen der Ringkolben größere radiale Abmessungen aufweist als das Ausrücklager, ist die Anordnung eines Anschlags zur Begrenzung der axialen Bewegung des Kolbens problematischer. Auf Grund der Größe des Ringkolbens ist für die entsprechende Anbringung eines Anschlags häufig wenig Platz vorhanden.

Einen derartigen konzentrischen Nehmerzylinder, bei dem der Ringkolben in radialer Richtung außerhalb des Ausrücklagers angeordnet ist, zeigt die DE 11 2005 000 957 T5. Der CSC umfasst einen ringförmigen Kolben, der in einer ringförmigen Bohrung eines Gehäusekörpers in axialer Richtung gleiten kann. Dabei ist der Ringkolben an seinem Außenrand mit einem Flansch ausgestattet, innerhalb dessen sich ein Betätigungslager (Ausrücklager) befindet. Der innere Laufring des Betätigungslagers liegt an den Betätigungsfingern einer Membranfeder der zugehörigen Fahrzeugkupplung an. Eine zwischen dem Gehäusekörper und dem äußeren Laufring angeordnete Druckfeder übt eine konstante Kraft auf die Einkuppelfinger aus, wenn die Kupplung eingekuppelt ist und sich der CSC in der gänzlich zurückgezogenen Stellung befindet. Bei Unterdrucksetzung der den Kolben aufnehmenden Bohrung bewegt sich der Kolben von der gänzlich zurückgezogenen Stellung in eine Auskuppelstellung. Dabei wird der Kolben durch einen oder mehrere Anschläge in der Bohrung des Gehäusekörpers gehalten. Die Anschläge sind mittels Ultraschall angeschweißt oder auf andere Weise am freien Ende der Außenwand des Gehäusekörpers befestigt. Durch die Anordnung dieser Anschläge, die mit einem weiteren, in radialer Richtung nach außen zeigenden, Flansch des Kolbens aneinander stoßen, wird verhindert, dass der Kolben durch die Feder aus der Bohrung gedrückt wird.
Allerdings ist die Anbringung der Anschläge an dem Gehäuse beispielsweise mittels Ultraschallschweißen zeit- und kostenaufwändig. Eine Demontage des Nehmerzylinders/Kolbens ist nur durch eine Entfernung der Anschläge möglich, wobei die Gefahr einer Beschädigung des Nehmerzylinders besteht.

Die Aufgabe der Erfindung besteht darin, eine Ausrückvorrichtung für eine hydraulische Kupplungsbetätigung von Fahrzeugen mit einem radial außerhalb des Ausrücklagers angeordneten Ringkolben zu schaffen, wobei ein die axiale Bewegung des Ringkolbens begrenzender Anschlag vorgesehen ist, der keine axiale oder radiale Bauraumvergrößerung notwendig macht sowie bei einfacher Ausführung leicht montierbar und wieder demontierbar ist.

Die Aufgabe wird durch die Merkmale des ersten Patentanspruchs gelöst. Vorteilhafte Ausgestaltungen ergeben sich aus den Unteransprüchen.

Bei einer Ausrückvorrichtung für eine hydraulische Kupplungsbetätigung von Fahrzeugen, mit einem konzentrisch um eine Getriebeeingangswelle angeordneten Nehmerzylinder, dessen innerhalb eines Gehäuses axial bewegbarer und mit einem Ausrücklager verbundener Ringkolben radial außerhalb des Ausrücklagers angeordnet ist, wobei zumindest ein Anschlagelement zur Begrenzung der axialen Bewegung des Ringkolbens vorgesehen ist, ist erfindungsgemäß das mit dem Ringkolben verbundene Ausrücklager an dem Anschlagelement axial zur Anlage bringbar.

Das Anschlagelement ist vorzugsweise an einer radial innerhalb des Ausrücklagers befindlichen, sich in Axialrichtung erstreckenden Gehäusewand angeordnet.

Dabei ist ein äußerer Lagerring des Ausrücklagers an dem Anschlagelement zur Anlage bringbar.

Das als Sprengring ausgebildete Anschlagelement ist in eine an der inneren Gehäusewand radial umlaufenden Nut einbringbar.

Vorzugsweise weist der äußere Lagerring des Ausrücklagers eine mit dem Anschlagelement in Kontakt bringbare Anlageschräge auf.

Das Ausrücklager ist zwischen der inneren Gehäusewand und einer mittleren, sich in Axialrichtung erstreckenden Gehäusewand und der Ringkolben zwischen der mittleren Gehäusewand und einer äußeren, sich in Axialrichtung erstreckenden Gehäusewand angeordnet. Der Ringkolben ist hierbei mit einem äußeren Lagerring des Ausrücklagers verbunden.

Das Gehäuse kann sowohl einteilig als auch mehrteilig ausgebildet sein.

Die Erfindung wird nachstehend anhand eines Ausführungsbeispiels und zugehörigen Zeichnungen näher erläutert. Es zeigen:
- Figur 1: einen Längsschnitt einer erfindungsgemäßen Ausrückvorrichtung mit in eingerückter Endlage befindlichem Ringkolben
- Figur 2: einen Längsschnitt einer erfindungsgemäßen Ausrückvorrichtung mit in ausgerückter Endlage befindlichem Ringkolben

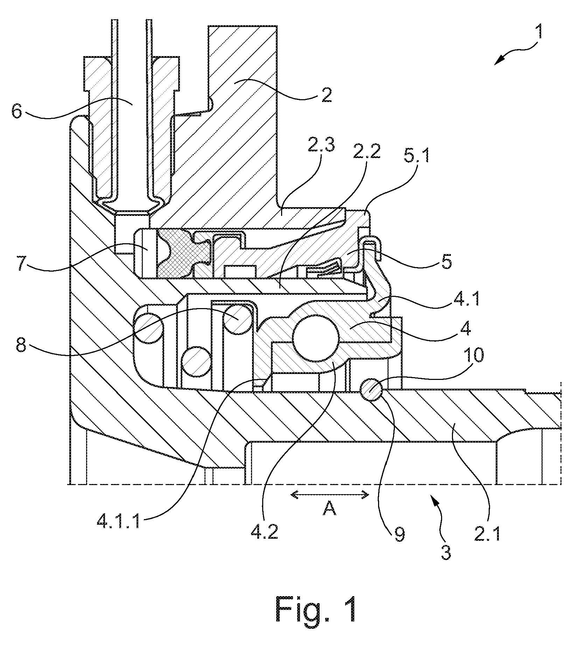

In Figur 1 ist ein Längsschnitt entlang einer Axialrichtung A durch eine erfindungsgemäße Ausrückvorrichtung 1 in schematischer Darstellung gezeigt. Die Ausrückvorrichtung 1 umfasst einen sich in einer eingekuppelten Stellung befindenden konzentrischen Nehmerzylinder, welcher ein einteilig aufgebautes, kreisringförmiges Gehäuse 2 aufweist. Ebenso ist der Einsatz eines mehrteilig aufgebauten Gehäuses 2 möglich. Das Gehäuse 2 besteht aus drei sich in Axialrichtung A erstreckenden Wänden, einer inneren Gehäusewand 2.1, einer mittleren Gehäusewand 2.2 und einer äußeren Gehäusewand 2.3. Die innere Gehäusewand 2.1 umhüllt in Axialrichtung A eine zentrale Ausnehmung 3, die üblicherweise von einer Getriebeeingangswelle (nicht dargestellt) durchdrungen wird. Zwischen der inneren Gehäusewand 2.1 und der mittleren Gehäusewand 2.2 ist ein Ausrücklager 4 angeordnet, während zwischen der mittleren Gehäusewand 2.2 und der äußeren Gehäusewand 2.3 - d. h. radial außerhalb des Ausrücklagers 4 - ein Ringkolben 5 vorgesehen ist. Über eine Einlassöffnung 6 im Gehäuse 2 des Nehmerzylinders kann ein Druckmittel in einen an dem einen Ende des Ringkolbens 5 vorgesehenen Druckraum 7 eingeführt werden. Der in an sich bekannter Weise in Axialrichtung A bewegbare Ringkolben 5 weist an seinem dem Druckraum 7 abgewandten Ende einen Außenflansch 5.1 auf, innerhalb dessen das Ausrücklager 4 aufgenommen wird. Dabei ist ein äußerer Lagerring 4.1 des schematisch dargestellten Ausrücklagers 4 über Befestigungsmittel, auf die hier nicht näher eingegangen werden soll, an dem Ringkolben 5 befestigt. Um auftretende Radialtoleranzen auszugleichen, ist der äußere Laufring 4.1 dabei mit einer Fase versehen. Der innere Lagerring 4.2 liegt üblicherweise an einem hier nicht gezeigten Betätigungselement, beispielsweise einer Membranfeder, der zugehörigen Fahrzeugkupplung an. Eine zwischen dem Gehäuse 2 und dem Ausrücklager 4 vorgesehene Druckfeder 8 übt eine konstante Kraft auf das Betätigungselement aus, wenn die Kupplung eingekuppelt ist und sich der Ringkolben 5 in der gänzlich zurückgezogenen Stellung - der eingerückten Endlage des CSC - gemäß Fig. 1 befindet. Auf der dem Ausrücklager 4 zugewandten Mantelfläche der inneren Gehäusewand 2.1 ist eine radial umlaufende Nut 9 vorgesehen, in welcher ein Anschlagelement 10 angeordnet ist. Das Anschlagelement 10 ist dabei als ein Sprengring ausgebildet, der in der eingerückten Endlage des CSC ohne Probleme in die Nut 9 eingebracht werden kann, da sich in dieser Stellung auch das mit dem Ringkolben 5 verbundene Ausrücklager 4 - bei komprimierter Druckfeder 8 - in der zurückgezogenen Position befindet.

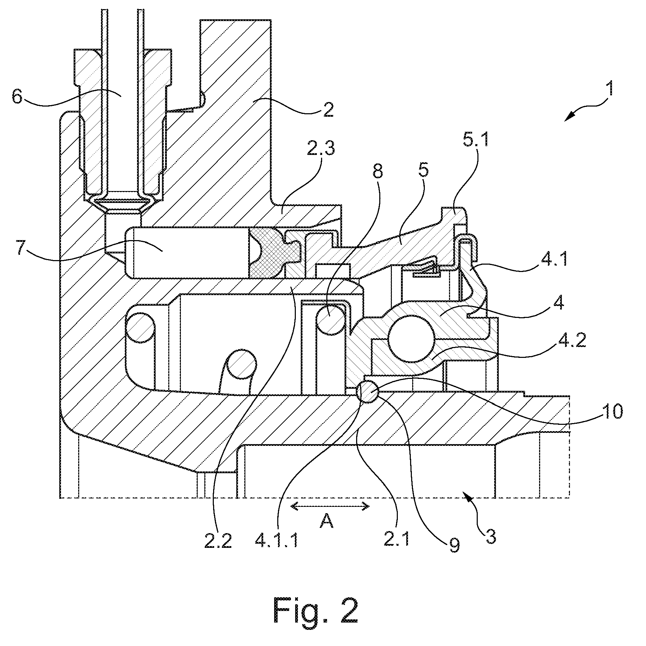

Gemäß Figur 2 hat sich der Ringkolben 5 durch Einführung eines Druckmediums durch die Einlassöffnung 6 in den Druckraum 7 aus der eingerückten in eine ausgerückte Endlage, der Auskuppelstellung, verschoben. Der Ringkolben 5 - und mit ihm das Ausrücklager 4 - hat somit eine Bewegung in Axialrichtung A durchgeführt (von der in Fig. 1 gezeigten Position nach rechts). Die Druckfeder 8 entspannt sich und drückt dabei das Ausrücklager 4 an das Anschlagelement 10, wobei der äußere Lagerring 4.1 des Ausrücklagers 4 an dem als Anschlagelement 10 fungierenden Sprengring zur Anlage kommt. Der äußere Lagerring 4.1 weist eine als Anlageschräge 4.1.1 ausgebildete, radial umlaufende, Fase auf, welche mit einer entsprechenden Umfangsfläche des Sprengrings in Kontakt bringbar ist. Bei sich in Anlage an dem Anschlagelement 10 befindlichem äußeren Lagerring 4.1 befindet sich auch der mit dem äußeren Lagerring 4.1 des Ausrücklagers 4 verbundene Ringkolben 5 in seiner maximalen Endlage. Eine weitere axiale Bewegung des Ringkolbens 5 ist nicht möglich. Der von dem Ringkolben 5 zurückgelegte maximale Weg ist somit definiert durch die von dem Anschlagelement 10 erfolgte Begrenzung des Weges des Ausrücklagers 4.

Besonders vorteilhaft an dieser Ausführung des Anschlagelements 10 ist seine einfache Montage und auch Demontage. Durch den Einsatz eines handelsüblichen (Katalogteil) Sprengrings bedeutet das eine mit geringem Aufwand und wenig Kosten zu verwirklichende Lösung, die zudem keinen zusätzlichen axialen und radialen Bauraum erforderlich macht.

### Bezugszeichenliste

- 1: Ausrückvorrichtung
- 2: Gehäuse
- 2.1: innere Gehäusewand
- 2.2: mittlere Gehäusewand
- 2.3: äußere Gehäusewand
- 3: Ausnehmung
- 4: Ausrücklager
- 4.1: äußerer Lagerring
- 4.2: innerer Lagerring
- 4.1.1: Anlageschräge
- 5: Ringkolben
- 5.1: Außenflansch
- 6: Einlassöffnung
- 7: Druckraum
- 8: Druckfeder
- 9: Nut
- 10: Anschlagelement/Sprengring
- A: Axialrichtung

## Patentansprüche

1. Ausrückvorrichtung für eine hydraulische Kupplungsbetätigung von Fahrzeugen, mit einem konzentrisch um eine Getriebeeingangswelle angeordneten Nehmerzylinder, dessen innerhalb eines Gehäuses (2) axial bewegbarer und mit einem Ausrücklager (4) verbundener Ringkolben (5) radial außerhalb des Ausrücklagers (4) angeordnet ist, wobei zumindest ein Anschlagelement (10) zur Begrenzung der axialen Bewegung des Ringkolbens (5) vorgesehen ist, **dadurch gekennzeichnet, dass** das mit dem Ringkolben (5) verbundene Ausrücklager (4) an dem Anschlagelement (10) axial zur Anlage bringbar ist.

2. Ausrückvorrichtung nach Anspruch 1, **dadurch gekennzeichnet, dass** das Anschlagelement (10) an einer radial innerhalb des Ausrücklagers (4) befindlichen, sich in Axialrichtung (A) erstreckenden Gehäusewand (2.1) angeordnet ist.

3. Ausrückvorrichtung nach Anspruch 1 oder 2, **dadurch gekennzeichnet, dass** an dem Anschlagelement (10) ein äußerer Lagerring (4.1) des Ausrücklagers (4) zur Anlage bringbar ist.

4. Ausrückvorrichtung nach Anspruch 2 oder 3, **dadurch gekennzeichnet, dass** das Anschlagelement (10) in eine an der inneren Gehäusewand (2.1) radial umlaufenden Nut (9) einbringbar ist.

5. Ausrückvorrichtung nach einem der Ansprüche 1 bis 4, **dadurch gekennzeichnet, dass** das Anschlagelement (10) von einem Sprengring gebildet wird.

6. Ausrückvorrichtung nach einem der Ansprüche 3 bis 5, **dadurch gekennzeichnet, dass** der äußere Lagerring (4.1) des Ausrücklagers (4) eine mit dem Anschlagelement (10) in Kontakt bringbare Anlageschräge (4.1.1) aufweist.

7. Ausrückvorrichtung nach einem der Ansprüche 2 bis 6, **dadurch gekennzeichnet, dass** das Ausrücklager (4) zwischen der inneren Gehäusewand (2.1) und einer mittleren, sich in Axialrichtung (A) erstreckenden, Gehäusewand (2.2) und der Ringkolben (5) zwischen der mittleren Gehäusewand (2.2) und einer äußeren, sich in Axialrichtung erstreckenden, Gehäusewand (2.3) angeordnet ist.

8. Ausrückvorrichtung nach einem der Ansprüche 1 bis 7, **dadurch gekennzeichnet, dass** der Ringkolben (5) mit einem äußeren Lagerring (4.1) des Ausrücklagers (4) verbunden ist.

9. Ausrückvorrichtung nach einem der Ansprüche 1 bis 8, **dadurch gekennzeichnet, dass** das Gehäuse (2) einteilig ausgebildet ist.

10. Ausrückvorrichtung nach einem der Ansprüche 1 bis 8, **dadurch gekennzeichnet, dass** das Gehäuse (2) mehrteilig ausgebildet ist.

## Claims

1. Release apparatus for a hydraulic clutch actuation means of vehicles, having a slave cylinder which is arranged concentrically around a transmission input shaft and the annular piston (5) of which, which can be moved axially within a housing (2) and is connected to a release bearing (4), is arranged radially outside the release bearing (4), at least one stop element (10) being provided for limiting the axial movement of the annular piston (5), **characterized in that** the release bearing (4) which is connected to the annular piston (5) can be brought axially into contact with the stop element (10).

2. Release apparatus according to Claim 1, **characterized in that** the stop element (10) is arranged on a housing wall (2.1) which is situated radially within the release bearing (4) and extends in the axial direction (A).

3. Release apparatus according to Claim 1 or 2, **characterized in that** an outer bearing ring (4.1) of the release bearing (4) can be brought into contact with the stop element (10).

4. Release apparatus according to Claim 2 or 3, **characterized in that** the stop element (10) can be introduced into a groove (9) which runs around radially on the inner housing wall (2.1).

5. Release apparatus according to one of Claims 1 to 4, **characterized in that** the stop element (10) is formed by a circlip.

6. Release apparatus according to one of Claims 3 to 5, **characterized in that** the outer bearing ring (4.1) of the release bearing (4) has a bearing bevel (4.1.1) which can be brought into contact with the stop element (10).

7. Release apparatus according to one of Claims 2 to 6, **characterized in that** the release bearing (4) is arranged between the inner housing wall (2.1) and the middle housing wall (2.2) which extends in the axial direction (A), and the annular piston (5) is arranged between the middle housing wall (2.2) and an outer housing wall (2.3) which extends in the axial direction.

8. Release apparatus according to one of Claims 1 to 7, **characterized in that** the annular piston (5) is connected to an outer bearing ring (4.1) of the release bearing (4).

9. Release apparatus according to one of Claims 1 to 8, **characterized in that** the housing (2) is configured in one piece.

10. Release apparatus according to one of Claims 1 to 8, **characterized in that** the housing (2) is configured in multiple pieces.

## Revendications

1. Dispositif de débrayage pour un actionnement d'embrayage hydraulique de véhicules comprenant un cylindre récepteur disposé concentriquement autour d'un arbre d'entrée de boîte de vitesses, dont le piston annulaire (5) déplaçable axialement à l'intérieur d'un boîtier (2) connecté à un palier de débrayage (4) est disposé radialement à l'extérieur du palier de débrayage (4), au moins un élément de butée (10) pour limiter le déplacement axial du piston annulaire (5) étant prévu, **caractérisé en ce que** le palier de débrayage (4) connecté au piston annulaire (5) peut être amené en appui axialement contre l'élément de butée (10).

2. Dispositif de débrayage selon la revendication 1, **caractérisé en ce que** l'élément de butée (10) est disposé au niveau d'une paroi de boîtier (2.1) située radialement à l'intérieur du palier de débrayage (4), s'étendant dans la direction axiale (A).

3. Dispositif de débrayage selon la revendication 1 ou 2, **caractérisé en ce qu'**une bague de palier extérieure (4.1) du palier de débrayage (4) peut être amenée en appui contre l'élément de butée (10).

4. Dispositif de débrayage selon la revendication 2 ou 3, **caractérisé en ce que** l'élément de butée (10) peut être introduit dans une rainure (9) radialement périphérique au niveau de la paroi de boîtier intérieure (2.1).

5. Dispositif de débrayage selon l'une quelconque des revendications 1 à 4, **caractérisé en ce que** l'élément de butée (10) est formé par un jonc.

6. Dispositif de débrayage selon l'une quelconque des revendications 3 à 5, **caractérisé en ce que** la bague de palier extérieure (4.1) du palier de débrayage (4) présente un biseau d'appui (4.1.1) pouvant être amené en contact avec l'élément de butée (10).

7. Dispositif de débrayage selon l'une quelconque des revendications 2 à 6, **caractérisé en ce que** le palier de débrayage (4) est disposé entre la paroi de boîtier intérieure (2.1) et une paroi de boîtier centrale (2.2) s'étendant dans la direction axiale (A) et le piston annulaire (5) est disposé entre la paroi de boîtier centrale (2.2) et une paroi de boîtier extérieure (2.3) s'étendant dans la direction axiale.

8. Dispositif de débrayage selon l'une quelconque des revendications 1 à 7, **caractérisé en ce que** le piston annulaire (5) est connecté à une bague de palier extérieure (4.1) du palier de débrayage (4).

9. Dispositif de débrayage selon l'une quelconque des revendications 1 à 8, **caractérisé en ce que** le boîtier (2) est réalisé d'une seule pièce.

10. Dispositif de débrayage selon l'une quelconque des revendications 1 à 8, **caractérisé en ce que** le boîtier (2) est réalisé en plusieurs parties.
